# EUROPÄISCHE PATENTSCHRIFT

(11) **EP 3 819 601 B1**
(45) Veröffentlichungstag und Bekanntmachung des Hinweises auf die Patenterteilung: **20.08.2025**
(21) Anmeldenummer: 20205468.0
(22) Anmeldetag: 03.11.2020
(51) Int. Cl.: G01F 1/84

(54) **CORIOLIS-MASSENDURCHFLUSSMESSGERÄT UND KNOTENELEMENT**
CORIOLIS MASS FLOW METER AND NODE ELEMENT
APPAREIL DE MESURE DE DÉBIT MASSIQUE À EFFET CORIOLIS ET PLAQUE DE NOEUD

(30) Priorität: 05.11.2019 DE 102019129744
(43) Veröffentlichungstag der Anmeldung: 12.05.2021
(73) Patentinhaber: Krohne AG, 4019 Basel (CH)
(72) Erfinder: Wang, Tao, Rough Common, Canterburry, CT2 9DG (GB)
(74) Vertreter: Gesthuysen Patentanwälte

(56) Entgegenhaltungen:
- EP-A1- 0 685 712
- DE-A1- 102015 003 365
- US-A1- 2008 047 361
- US-A1- 2011 247 433
- US-A1- 2015 330 821

## Beschreibung

Die Erfindung geht aus von einem Coriolis-Massedurchflussmessgerät mit wenigstens einem Messrohr, mit wenigstens einem Schwingungserzeuger und wenigstens zwei Schwingungsaufnehmern und mit wenigstens zwei Knotenelementen, wobei der wenigstens eine Schwingungserzeuger das Messrohr im Betrieb zu einer Schwingung anregt, wobei die wenigstens zwei Knotenelemente den Schwingungsbereich definieren und wobei wenigstens ein Knotenelement wenigstens ein Versteifungselement aufweist. Darüber hinaus betrifft die Erfindung ein Knotenelement zur Verwendung in einem Coriolis-Massendurchflussmessgerät mit wenigstens einem Messrohr, mit wenigstens einem Schwingungserzeuger und wenigstens zwei Schwingungsaufnehmern, wobei der wenigstens eine Schwingungserzeuger das Messrohr im Betrieb zu einer Schwingung anregt, wobei durch wenigstens zwei Knotenelemente der Schwingungsbereich definiert wird und wobei das Knotenelement wenigstens ein Versteifungselement aufweist.

Zur Bestimmung des Durchflusses durch ein Messrohr weisen Coriolis-Massedurchflussmessgeräte einen Schwingungserzeuger auf, der das Messrohr in eine Schwingung (Anregungsmode) versetzt. Durch das fließende Medium bildet das Rohr eine Coriolismode aus, die im Regelfall der ersten Oberschwingung der Anregungsmode entspricht. Ein- und auslaufseitig sind an dem Messrohr Schwingungsaufnehmer angeordnet, die die Schwingung des Messrohrs erfassen. Durch die Bestimmung des Phasenversatzes der an den Schwingungsaufnehmern gemessenen Schwingungen der Coriolismode lässt sich der Durchfluss des Mediums durch das Messrohr bestimmen.

Aus dem Stand der Technik ist es bekannt, zur Festlegung des Schwingungsbereichs Knotenplatten oder Knotenringe ein- und auslaufseitig an dem Messrohr anzuordnen. Diese Knotenplatten oder Knotenringe fixieren das Messrohr, wodurch endseitige Schwingungsknoten definiert werden. Im Rahmen der vorliegenden Erfindung kann das Knotenelement ebenfalls als Kontenring oder als Knotenplatte ausgebildet sein.

Neben der Anregung der gewünschten Coriolismode wird das Messrohr unter anderem durch die Anregung mit dem Schwingungserzeuger aber auch durch äußere Störquellen in von der Coriolismode abweichende Störschwingungen versetzt. Es ist bekannt, zur Unterdrückung bzw. zur Separation solcher Störschwingungen Versteifungselemente vorzusehen, die gezielt die Frequenz und die Amplitude der Störvibrationen beeinflussen.

Beispielsweise offenbart die Druckschrift DE 10 2005 003 161 A1 ein Coriolis-Massendurchflussmessgerät mit zwei Messrohren und mit einer die Messrohre verbindenden Verbindungseinrichtung, wobei die Verbindungseinrichtung derart ausgestaltet ist, dass ihre Biegesteifigkeit für Biegungen in der gemeinsamen Ebene der Messrohre größer ist als ihre Torsionssteifigkeit für Torsionsschwingungen um die Verbindungslinie zwischen den beiden Messrohren.

Die Druckschrift DE 10 2015 003 365 A1 betrifft ein Coriolis-Massendurchflussmessgerät mit zwei Messrohren, wobei die Messrohre durch eine Knotenplatte miteinander verbunden sind und wobei die Knotenplatte ein asymmetrisches Versteifungsmittel zur Erhöhung der Nullpunktstabilität aufweist. Im Detail dient das Versteifungsmittel dazu, die relative Position des ersten und zweiten Messrohrs im Bereich von deren geraden Abschnitten zu stabilisieren.

Auch das Dokument DE 10 2006 034 274 A1 offenbart ein Coriolis-Massendurchflussmessgerät mit zwei Messrohren, die über eine Verbindungseinrichtung miteinander verbunden sind, wobei die Verbindungseinrichtung eine an beiden Messrohren befestigte und parallel zur gemeinsamen Ebene der Messrohre angeordnete Versteifungsplatte aufweist und wobei an der Versteifungsplatte eine Versteifungsfinne vorgesehen ist. Auf diese Weise wird erreicht, dass die Biegesteifigkeit der Verbindungseinrichtung für Biegungen in der gemeinsamen Ebene der Messrohre, in der im allgemeinen auch die Anregungsschwingungen der Messrohre erfolgen, größer ist als die Torsionssteifigkeit der Verbindungseinrichtung für Torsionsschwingungen.

Zudem offenbart die Druckschrift WO 00/47956 ein Coriolis-Massedurchflussmessgerät mit einem Messrohr, wobei an dem Messrohr ein- und auslaufseitig jeweils ein Knotenring angeordnet ist und wobei jeder Knotenring laterale Versteifungselemente aufweist, sodass zur Separation der unterschiedlichen Schwingungsmoden die Frequenz von unterwünschten lateralen Schwingungen verändert wird.

Weiterhin offenbart die Druckschrift US 2015/0330821 A1 ein Coriolis-Massedurchflussmessgerät umfassend zwei Messrohre, die über Stützstreben miteinander gekoppelt sind. Diese Stützstreben können mit seitlichen Isolationsstreben verbunden sein.

Aus der Druckschrift US 2011/247433 A1 ist ein Coriolis-Massedurchflussmessgerät bekannt, wobei ein Knotenblech zur Unterdrückung von unerwünschten Störschwingungen vorhanden ist, das sich entlang der Krümmung der gebogenen Messrohre erstreckt.

Die Druckschrift EP 0 685 712 A1 beschreibt ein Coriolis-Massedurchflussmessgerät mit zwei Messrohren, wobei an jedem Messrohr zwei Knotenelemente angeordnet sind und wobei an jedem Knotenelement zwei Versteifungselemente angeordnet sind, wobei jedes Versteifungselement als flacher Steg ausgebildet ist.

Ausgehend von diesem Stand der Technik ist es Aufgabe der vorliegenden Erfindung ein Coriolis-Massedurchflussmessgerät anzugeben, das eine besonders effektive Separation von unerwünschten Störschwingungen des Messrohrs gewährleistet. Darüber hinaus ist es Aufgabe der Erfindung ein entsprechendes Knotenelement anzugeben.

Gemäß einer ersten Lehre der vorliegenden Erfindung wird die zuvor dargelegte Aufgabe durch ein eingangs genanntes Coriolis-Massedurchflussmessgerät dadurch gelöst, dass das wenigstens eine Knotenelement derart ausgebildet und angeordnet ist, dass das Versteifungselement die Steifheit des Messrohrs gegenüber zur Anregungsmode und zur Coriolismode orthogonalen Schwingungen erhöht, sodass im Betrieb die Schwingungsfrequenz der zur Anregungsmode und zur Coriolismode orthogonalen Schwingung höher ist als die Schwingungsfrequenz der Anregungsmode, vorzugsweise höher als die Frequenz der Coriolismode.

Erfindungsgemäß wurde erkannt, dass die Integration eines Versteifungselementes in das Knotenelement, sodass durch das Versteifungselement zur Anregungsmode und zu der sich ausbildenden Coriolismode orthogonale Schwingungen, also insbesondere vertikale Schwingungen, durch ihre Schwingungsfrequenz von der Anregungsmode zu unterscheiden sind, besonders vorteilhaft ist. Im Detail wird der Schwingungsbereich durch das wenigstens eine lokal wirkende Versteifungselement für die Schwingungen in der Ebene des Versteifungselementes bzw. der Versteifungselemente verkleinert. Auf diese Weise lassen sich Störvibrationen bei der Aufnahme und/oder der Auswertung der erfassten Schwingung des Messrohrs berücksichtigen bzw. herausfiltern, sodass im Ergebnis die Messgenauigkeit des Coriolis-Massedurchflussmessgeräts erhöht werden kann. Zusätzliche Bauteile zur Unterdrückung von Störschwingungen können auf diese Weise vermieden werden.

Gemäß einer bevorzugten Ausgestaltung ist wenigstens ein zweites Versteifungselement vorhanden, wobei das zweite Versteifungselement, vorzugsweise dem ersten Versteifungselement gegenüberliegend, an dem wenigstens einen Knotenelement angeordnet ist. Die Unterdrückung von unerwünschten vertikalen Schwingungen ist gemäß dieser Ausgestaltung besonders effektiv. Das zweite Versteifungselement kann identisch zu dem ersten Versteifungselement ausgebildet sein oder auch eine andere Form und/oder ein anderes Material aufweisen.

Eine nächste vorteilhafte Ausgestaltung des Coriolis-Massedurchflussmessgeräts zeichnet sich dadurch aus, dass das wenigstens eine Versteifungselement mit einer Auflagefläche auf dem Umfang des Messrohrs aufliegt. Diese Ausgestaltung weist den Vorteil auf, dass durch den direkten sowie vorzugsweise großflächigen Kontakt des Versteifungselements mit dem Messrohr die Steifigkeit des Messrohrs gegenüber Schwingungen orthogonal zur Anregungsschwingung besonders hoch ist.

Gemäß einer Ausgestaltung deckt das wenigstens eine Versteifungselement weniger als 40 %, vorzugsweise weniger als 30%, besonders bevorzugt weniger als 20%, des Messrohrumfangs ab. Gemäß einer Ausgestaltung deckt das Versteifungselement weniger als 10 % des Messrohrumfangs ab.

Besonders bevorzugt ist die Ausdehnung des Versteifungselementes senkrecht zum Messrohr zumindest abschnittsweise größer als die Ausdehnung des Versteifungselementes in Umfangsrichtung des Messrohrs. Gemäß einer weiteren Ausgestaltung ist die Ausdehnung des Versteifungselementes senkrecht zum Messrohr zumindest abschnittsweise ungefähr so groß wie die Ausdehnung des Versteifungselementes in Umfangsrichtung des Messrohrs.

Erfindungsgemäß weist das wenigstens eine Versteifungselement wenigstens zwei separate und/oder separat wirkende Komponenten auf. Diese Komponenten können miteinander verbunden oder separat auf dem Messrohr angeordnet sein. Besonders bevorzugt übt jede Komponente ein separates Flächenmoment auf das Messrohr aus. Auf diese Weise kann die Steifigkeit des Messrohrs gegenüber den zu unterdrückenden Störschwingungen besonders effektiv weiter erhöht werden.

Besonders bevorzugt ist die Ausdehnung wenigstens einer Komponente des Versteifungselementes senkrecht zum Messrohr größer als die Ausdehnung dieser Komponente in Umfangsrichtung des Messrohrs. Durch die daraus resultierende Vergrößerung des Flächenmoments ist die Steifigkeit des Messrohrs gegenüber Störvibrationen erhöht, was sich auf die Frequenz der Störvibration auswirkt.

Gemäß einer nächsten vorteilhaften Ausbildung des Coriolis-Massedurchflussmessgeräts verläuft die Längserstreckung wenigstens einer Komponente des Versteifungselementes parallel zur Längsachse des Messrohrs. Die Erstreckung der wenigstens einen Komponenten in Messrohrrichtung ist insofern größer als in den anderen Richtungen. Auf diese Weise ist die Kontaktfläche der wenigstens einen Komponente mit dem Versteifungselement besonders groß.

Erfindungsgemäß sind die wenigstens zwei Komponenten als wenigstens zwei Versteifungsrippen ausgebildet, wobei die wenigstens zwei Versteifungsrippen vorzugsweise mit der schmalen Kante auf dem Messrohr aufliegen. Diese Ausgestaltung ist hinsichtlich der Erhöhung der lokalen Steifigkeit des Messrohrs besonders vorteilhaft.

Weiter erfindungsgemäß sind die wenigstens zwei Versteifungsrippen parallel zueinander derart angeordnet, dass die dem Messrohr zugewandten Kanten auf einem Kreisbogen auf dem Messrohr angeordnet sind.

Zudem ist es weiterhin besonders vorteilhaft, wenn die Längserstreckung der wenigstens zwei Versteifungsrippen parallel zur Längsachse des Messrohrs ausgerichtet ist.

Besonders bevorzugt sind die einzelnen Komponenten des Versteifungselementes durch wenigstens eine, vorzugsweise kreisbogenförmige, Verbindungsfläche, vorzugsweise durch die Auflagefläche verbunden. Die wenigstens eine Verbindungsfläche ist gemäß einer Ausgestaltung an der dem Messrohr zugewandten Seite des Versteifungselementes und/oder an der dem Messrohr abgewandten Seite des Versteifungselementes angeordnet. Gemäß einer nächsten Ausgestaltung sind zwei Verbindungsflächen vorhanden, wobei jeweils eine Verbindungsfläche auf der dem Messrohr zugewandten Seite des Versteifungselementes und eine Verbindungsfläche auf der dem Messrohr abgewandten Seite des Versteifungselementes angeordnet ist.

Gemäß einer nächsten Ausgestaltung ist das wenigstens eine Versteifungselement einstückig mit dem Knotenelement ausgebildet. Im Rahmen der vorliegenden Erfindung bedeutet "einstückig", dass das Knotenelement und das Versteifungselement aus einem Werkstück hergestellt und nicht nachträglich miteinander verbunden sind.

Gemäß einer besonders bevorzugten Ausgestaltung ist das wenigstens eine Knotenelement mit dem wenigstens einen Versteifungselement mittels eines generativen Verfahrens unmittelbar auf das Messrohr aufgebracht. Alternativ kann das wenigstens eine Knotenelement mit dem wenigstens einen Versteifungselement auch mittels eines herkömmlichen Verfahrens hergestellt sein und nachträglich mit dem Messrohr verbunden sein.

Gemäß einer zweiten Lehre der vorliegenden Erfindung wird die eingangs genannte Aufgabe durch ein eingangs beschriebenes Knotenelement, insbesondere in Form eines Knotenrings oder einer Knotenplatte, dadurch gelöst, dass das Knotenelement derart ausgebildet und im Betrieb derart anordenbar ist, dass das Versteifungselement die Steifheit des Messrohrs gegenüber zur Anregungsmode und zur Coriolismode orthogonale Schwingungen erhöht, sodass im Betrieb die Schwingungsfrequenz der zur Anregungsmode und zur Coriolismode orthogonalen Schwingungen höher ist als die Schwingungsfrequenz der Anregungsmode, vorzugsweise höher als die Frequenz der Coriolismode, dass das wenigstens eine Versteifungselement wenigstens zwei separate und/oder separat wirkende Komponenten aufweist,
wobei die wenigstens zwei separaten und/oder separat wirkenden Komponenten als wenigstens zwei Versteifungsrippen ausgestaltet sind und
dass die wenigstens zwei Versteifungsrippen parallel zueinander derart angeordnet sind, dass die dem Messrohr zugewandten Kanten im montierten Zustand auf einem Kreisbogen auf dem Messrohr angeordnet sind.

Gemäß einer besonders bevorzugten Ausgestaltung ist das Knotenelement derart ausgebildet, dass es sich für sämtliche der oben beschriebenen Coriolis-Massedurchflussmessgeräte eignet.

Im Einzelnen gibt es nun eine Vielzahl von Möglichkeit das erfindungsgemäße Coriolis-Massedurchflussmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: ein erstes Ausführungsbeispiel eines Knotenelementes,
- Fig. 2: ein zweites Ausführungsbeispiel eines Knotenelementes,
- Fig. 3: ein drittes Ausführungsbeispiel eines an einem Messrohr angeordneten Knotenelementes,
- Fig. 4: ein viertes Ausführungsbeispiel eines an einem Messrohr angeordneten Knotenelementes,
- Fig. 5: ein nicht erfindungsgemäßes Beispiel eines an einem Messrohr angeordneten Knotenelementes und
- Fig. 6: ein erstes Ausführungsbeispiel eines erfindungsgemäßen Coriolis-Massedurchflussmessgeräts.

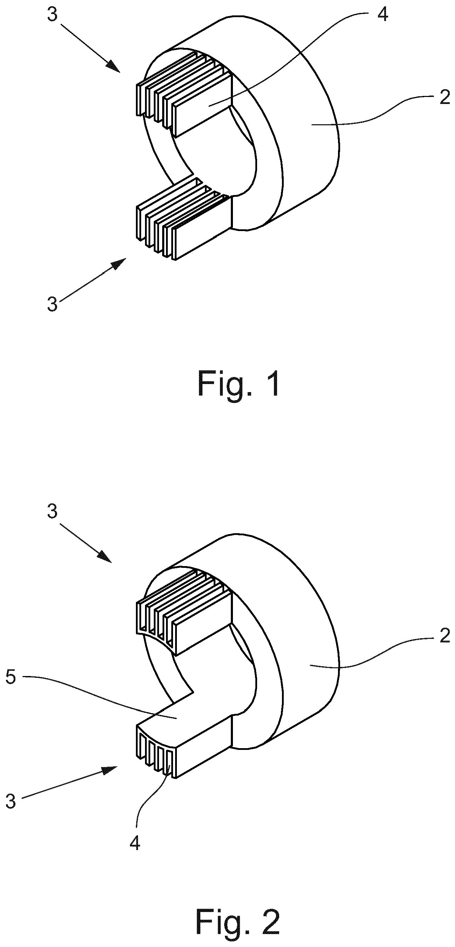

In Fig. 1 ist ein erstes Ausführungsbeispiel eines Knotenelementes 2, das als Knotenring ausgebildet ist, mit einem Versteifungselement 3 dargestellt. Im dargestellten Ausführungsbeispiel weist das Versteifungselement 3 fünf Versteifungsrippen 4 auf. Zudem weist der Knotenring ein zweites Versteifungselement 3 auf, das dem ersten Versteifungselement 3 gegenüberliegend an dem Knotenring angeordnet ist, wobei das zweite Versteifungselement ebenfalls fünf Versteifungsrippen 4 aufweist. Die einzelnen Versteifungsrippen 4 der Versteifungselemente 3 sind derart ausgerichtet und angeordnet, dass sie im Betrieb auf dem Messrohr 6 eines Coriolis-Massedurchflussmessgeräts 1 aufliegen. Dabei sind die Versteifungsrippen 4 derart ausgerichtet, dass im verbundenen Zustand deren Längserstreckung parallel zur Messrohrachse verläuft.

Insgesamt ist der dargestellte Knotenring 2 derart ausgebildet, dass er im verbundenen Zustand die Separation der sich senkrecht zur Anregungsmode und zur Coriolismode sich ausbildenden Störvibrationen von den interessierenden Schwingungen der Coriolismode ermöglicht. Bei einer Anregungsfrequenz von ca. 430 Hz lässt sich die zur Coriolismode senkrecht ausbildende Störvibration um ca. 40 Hz auf ca. 470 Hz erhöhen.

Fig. 2 zeigt ein zweites Ausführungsbeispiel eines Knotenrings 2 mit zwei gegenüberliegend angeordneten Versteifungselementen 3, die jeweils Versteifungsrippen 4 aufweisen. Im Unterschied zu dem in Fig. 1 dargestellten Ausführungsbeispiel sind die einzelnen Versteifungsrippen 4 durch eine Auflagefläche 5 miteinander verbunden.

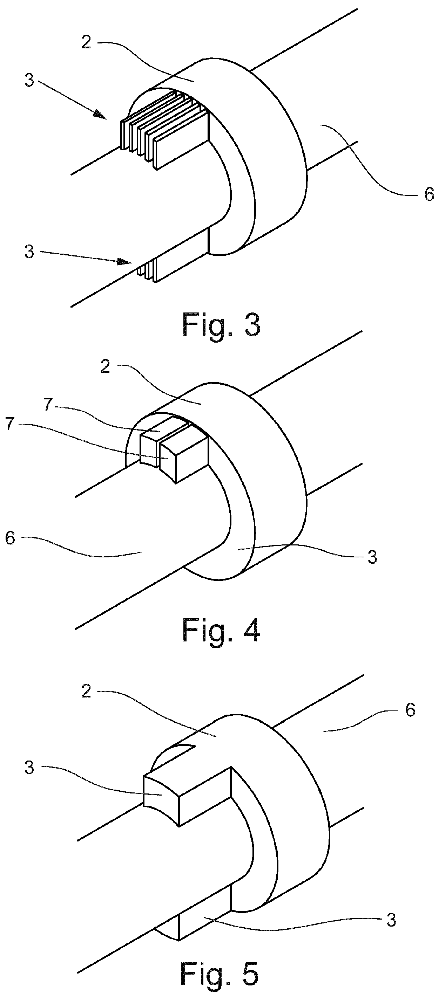

In Fig. 3 ist ein Knotenelement 2 in Form eines Knotenrings an einem Messrohr 6 angeordnet. Die Versteifungsrippen 4 liegen derart auf dem Messrohr 6 auf, dass sie die Steifigkeit des Messrohrs 6 in vertikaler Ebene derart erhöhen, dass sich die Frequenz der Schwingungen in vertikaler Ebene von der Frequenz der Schwingungen in horizontaler Ebene unterscheidet.

Fig. 4 zeigt ein weiteres Ausführungsbeispiel eines an einem Messrohr 6 angeordneten Knotenelementes 2 in Form eines Knotenrings, wobei in dem dargestellten Ausführungsbeispiel das Knotenelement 2 ein Versteifungselement 3 aufweist, wobei das Versteifungselement 3 zwei separate Komponenten 7 aufweist. Beide Komponenten 7 liegen auf dem Messrohr 6 auf. Die Komponenten 7 sind derart ausgebildet, dass ihre Ausdehnung senkrecht zum Messrohr 6 größer ist als die Ausdehnung der jeweiligen Komponente 7 in Umfangsrichtung des Messrohrs 6. Auf diese Weise lässt sich im Betrieb die Steifigkeit des Messrohrs 6 in vertikaler Richtung besonders vorteilhaft erhöhen.

Das in Fig. 5 gezeigte nicht erfindungsgemäße Knotenelement 2 in Form eines Knotenrings weist zwei Versteifungselemente 3 auf, die mit einer Auflagefläche auf dem Messrohr 6 aufliegen. Dabei überdecken die beiden Versteifungselemente 3 jeweils weniger als 20 % des Messrohrumfangs.

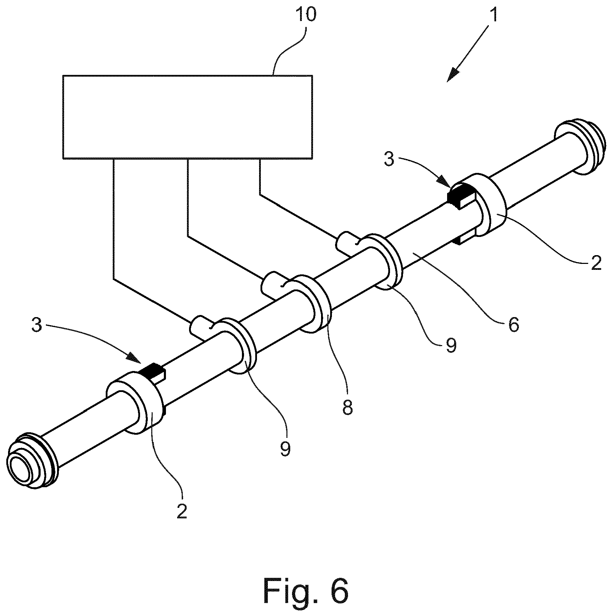

Fig. 6 zeigt ein erstes Auführungsbeispiel eines Coriolis-Massedurchflussmessgerätes 1 mit einem Messrohr 6, mit einem Schwingungserzeuger 8 und zwei Schwingungsaufnehmern 9 und mit einer Steuer- und Auswerteeinheit 10.

Zudem sind zwei Knotenelemente 2 an dem Messrohr 6 angeordnet, die den Schwingungsbereich des Messrohrs 6 definiere. Die Knotenelemente 2 weisen jeweils zwei Versteifungselemente 3 auf, die durch die Anordnung der Knotenelemente 2 derart ausgerichtet sind, dass sie die Steifheit des Messrohrs 6 gegenüber zur Anregungsmode orthogonalen Schwingungen erhöhen. Dadurch, dass Störvibrationen effektiv unterdrückt bzw. herausgefiltert werden können, weist das dargestellte Coriolis-Massedurchflussmessgerät eine besonders hohe Messgenauigkeit auf.

### Bezugszeichen

- 1: Coriolis-Massedurchflussmessgerät
- 2: Knotenelement
- 3: Versteifungselement
- 4: Versteifungsrippe
- 5: Auflagefläche
- 6: Messrohr
- 7: Komponente des Versteifungselementes
- 8: Schwingungserzeuger
- 9: Schwingungsaufnehmer
- 10: Steuer- und Auswerteeinheit

## Patentansprüche

1. Coriolis-Massedurchflussmessgerät (1) mit wenigstens einem Messrohr (6), mit wenigstens einem Schwingungserzeuger (8) und wenigstens zwei Schwingungsaufnehmern (9) und mit wenigstens zwei Knotenelementen (2), wobei der wenigstens eine Schwingungserzeuger (8) das Messrohr (6) im Betrieb zu einer Schwingung anregt, wobei die wenigstens zwei Knotenelemente den Schwingungsbereich definieren und wobei wenigstens ein Knotenelement (2) wenigstens ein Versteifungselement (3) aufweist,
und wobei das wenigstens eine Knotenelement (2), das wenigstens ein Versteifungselement (3) aufweist, derart ausgebildet und angeordnet ist, dass das Versteifungselement (3) die Steifheit des Messrohrs (6) gegenüber zur Anregungsmode und zur Coriolismode orthogonalen Schwingungen erhöht, sodass im Betrieb die Schwingungsfrequenz der zur Anregungsmode und zur Coriolismode orthogonalen Schwingung höher ist als die Schwingungsfrequenz der Anregungsmode, vorzugsweise höher als die Frequenz der Coriolismode,
**dadurch gekennzeichnet,**
**dass** das wenigstens eine Versteifungselement (3) wenigstens zwei separate und/oder separat wirkende Komponenten (7) aufweist,
wobei die wenigstens zwei separaten und/oder separat wirkenden Komponenten als wenigstens zwei Versteifungsrippen (4) ausgestaltet sind, und dass die wenigstens zwei Versteifungsrippen (4) parallel zueinander derart angeordnet sind, dass die dem Messrohr (6) zugewandten Kanten der Versteifungsrippen auf einem Kreisbogen auf dem Messrohr (6) angeordnet sind.

2. Coriolis-Massedurchflussmessgerät (1) nach Anspruch 1, **dadurch gekennzeichnet, dass** wenigstens ein zweites Versteifungselement (3) vorhanden ist, wobei das zweite Versteifungselement (3), vorzugsweise dem ersten Versteifungselement (3) gegenüberliegend, an dem Knotenelement (2) angeordnet ist.

3. Coriolis-Massedurchflussmessgerät (1) nach Anspruch 1 oder 2, **dadurch gekennzeichnet, dass** das wenigstens eine Versteifungselement (3) mit einer Auflagefläche (5) auf dem Umfang des Messrohrs (6) aufliegt.

4. Coriolis-Massedurchflussmessgerät (1) nach einem der Ansprüche 1 bis 3, **dadurch gekennzeichnet, dass** das wenigstens eine Versteifungselement (3) weniger als 40 %, vorzugsweise weniger als 30%, besonders bevorzugt weniger als 20%, des Messrohrumfangs abdeckt.

5. Coriolis-Massedurchflussmessgerät (1) nach einem der Ansprüche 1 bis 4, **dadurch gekennzeichnet, dass** die Ausdehnung des Versteifungselementes (3) senkrecht zum Messrohr (6) zumindest abschnittsweise größer ist als die Ausdehnung des Versteifungselementes (3) in Umfangsrichtung des Messrohrs (6).

6. Coriolis-Massedurchflussmessgerät (1) nach einem der Ansprüche 1 bis 5, **dadurch gekennzeichnet, dass** die Ausdehnung wenigstens einer Komponente (7) des Versteifungselementes senkrecht zum Messrohr größer ist als die Ausdehnung dieser Komponente in Umfangsrichtung des Messrohrs.

7. Coriolis-Massedurchflussmessgerät (1) nach einem der Ansprüche 1 bis 6, **dadurch gekennzeichnet, dass** die Längserstreckung wenigstens einer Komponente (7) des Versteifungselementes (3) parallel zur Längsachse des Messrohrs (6) verläuft.

8. Coriolis-Massendurchflussmessgerät (1) nach einem der Ansprüche 1 bis 7, **dadurch gekennzeichnet, dass** die wenigstens zwei Komponenten (7) als wenigstens zwei Versteifungsrippen (4) ausgestaltet sind, wobei die wenigstens zwei Versteifungsrippen (4) mit der schmalen Kante auf dem Messrohr (6) aufliegen.

9. Coriolis-Massedurchflussmessgerät (1) nach einem der Ansprüche 1 bis 8, **dadurch gekennzeichnet, dass** die einzelnen Komponenten (7) des Versteifungselementes (3) durch wenigstens eine, insbesondere kreisbogenförmige, Verbindungsfläche, vorzugsweise durch die Auflagefläche (5), verbunden sind, wobei die wenigstens eine Verbindungsfläche an dem Messrohr zugewandten Seite des Versteifungselementes und/oder an der dem Messrohr abgewandten Seite des Versteifungselementes angeordnet ist.

10. Coriolis-Massedurchflussmessgerät (1) nach einem der Ansprüche 1 bis 9, **dadurch gekennzeichnet, dass** das wenigstens eine Versteifungselement (3) einstückig mit dem Knotenelement (2) ausgebildet ist.

11. Coriolis-Massedurchflussmessgerät (1) nach einem der Ansprüche 1 bis 10, **dadurch gekennzeichnet, dass** das wenigstens eine Knotenelement (2) mit dem wenigstens einen Versteifungselement (3) mittels eines generativen Verfahrens unmittelbar auf das Messrohr (6) aufgebracht ist.

12. Knotenelement (2) zur Verwendung in einem Coriolis-Massendurchflussmessgerät (1) mit wenigstens einem Messrohr (6), mit wenigstens einem Schwingungserzeuger (8) und wenigstens zwei Schwingungsaufnehmern (9), wobei der wenigstens eine Schwingungserzeuger (8) das Messrohr (6) im Betrieb zu einer Schwingung anregt, wobei durch wenigstens zwei Knotenelemente der Schwingungsbereich definiert wird und wobei das Knotenelement (2) wenigstens ein Versteifungselement (3) aufweist,
und wobei das Knotenelement (2) derart ausgebildet und im Betrieb anordenbar ist, dass das Versteifungselement (3) die Steifheit des Messrohrs (6) gegenüber zur Anregungsmode und zur Coriolismode orthogonalen Schwingungen erhöht, sodass im Betrieb die Schwingungsfrequenz der zur Anregungsmode und zur Coriolismode orthogonalen Schwingung höher ist als die Schwingungsfrequenz der Anregungsmode, vorzugsweise höher als die Frequenz der Coriolismode,
**dadurch gekennzeichnet,**
**dass** das wenigstens eine Versteifungselement (3) wenigstens zwei separate und/oder separat wirkende Komponenten (7) aufweist,
wobei die wenigstens zwei separaten und/oder separat wirkenden Komponenten als wenigstens zwei Versteifungsrippen (4) ausgestaltet sind, und dass die wenigstens zwei Versteifungsrippen (4) parallel zueinander derart angeordnet sind, dass im montierten Zustand die dem Messrohr (6) zugewandten Kanten der Versteifungsrippen auf einem Kreisbogen auf dem Messrohr (6) angeordnet sind.

13. Knotenelement (2) nach Anspruch 12, **gekennzeichnet durch** die Merkmale des Kennzeichnungsteils wenigstens eines Anspruchs der Ansprüche 2 bis 11.

## Claims

1. Coriolis mass flowmeter (1) having at least one measuring tube (6), having at least one oscillation generator (8) and at least two oscillation sensors (9) and having at least two node elements (2), wherein the at least one oscillation generator (8) excites the measuring tube (6) to oscillation during operation, wherein the at least two node elements define the oscillation range and wherein at least one node element (2) has at least one stiffening element (3), and
wherein the at least one node element (2), which has at least one stiffening element (3), is designed and arranged in such a manner that the stiffening element (3) increases the stiffness of the measuring tube (6) with respect to oscillations orthogonal to the excitation mode and to the Coriolis mode so that, during operation, the oscillation frequency of the oscillation orthogonal to the excitation mode and to the Coriolis mode is greater than the oscillation frequency of the excitation mode, preferably greater than the frequency of the Coriolis mode,
**characterized in**
**that** the at least one stiffening element (3) has at least two separate and/or separately acting components (7),
wherein the at least two separate and/or separately acting components are designed as at least two stiffening ribs (4) and
**that** the at least two stiffening ribs (4) are arranged parallel to each other in such a way that the edges of the stiffening ribs facing the measuring tube (6) are arranged on a circular arc on the measuring tube (6).

2. Coriolis mass flowmeter (1) according to claim 1, **characterized in that** at least a second stiffening element (3) is present, wherein the second stiffening element (3) is arranged, preferably opposite to the first stiffening element (3), on the node element (2).

3. Coriolis mass flowmeter (1) according to claim 1 or 2, **characterized in that** the at least one stiffening element (3) rests on the circumference of the measuring tube (6) with a resting surface (5).

4. Coriolis mass flowmeter (1) according to any one of claims 1 to 3, **characterized in that** the at least one stiffening element (3) covers less than 40%, preferably less than 30%, particularly preferably less than 20%, of the circumference of the measuring tube.

5. Coriolis mass flowmeter (1) according to any one of claims 1 to 4, **characterized in that** the extension of the stiffening element (3) perpendicular to the measuring tube (6) is greater, at least in sections, than the extension of the stiffening element (3) in the circumferential direction of the measuring tube (6).

6. Coriolis mass flowmeter (1) according to any one of claims 1 to 5, **characterized in that** the extension of at least one component (7) of the stiffening element perpendicular to the measuring tube is greater than the extension of this component in the circumferential direction of the measuring tube.

7. Coriolis mass flowmeter (1) according to any one of claims 1 to 6, **characterized in that** the longitudinal extension of at least one component (7) of the stiffening element (3) extends parallel to the longitudinal axis of the measuring tube (6).

8. Coriolis mass flowmeter (1) according to any one of claims 1 to 7, **characterized in that** the at least two components (7) are designed as at least two stiffening ribs (4), wherein the at least two stiffening ribs (4) preferably rest on the measuring tube (6) with the narrow edge.

9. Coriolis mass flowmeter (1) according to any one of claims 6 to 10, **characterized in that** the individual components (7) of the stiffening element (3) are connected by at least one, in particular arc-shaped, connecting surface, preferably by the resting surface (5), wherein the at least one connecting surface is arranged on the side of the stiffening element facing the measuring tube and/or on the side of the stiffening element facing away from the measuring tube.

10. Coriolis mass flowmeter (1) according to any one of claims 1 to 9, **characterized in that** the at least one stiffening element (3) is formed integrally with the node element (2).

11. Coriolis mass flowmeter (1) according to any one of claims 1 to 10, **characterized in that** the at least one node element (2) with the at least one stiffening element (3) is applied directly to the measuring tube (6) by means of a generative method.

12. Node element (2) for use in a Coriolis mass flowmeter (1) having at least one measuring tube (6), having at least one oscillation generator (8) and at least two oscillation sensors (9), wherein the at least one oscillation generator (8) excites the measuring tube (6) to oscillation during operation, wherein the at least two node elements define the oscillation range and wherein the node element (2) has at least one stiffening element (3), and
wherein, during operation, the at least one node element (2) is designed and can be arranged in such a manner that the stiffening element (3) increases the stiffness of the measuring tube (6) with respect to the oscillations orthogonal to the excitation mode and to the Coriolis mode, so that, during operation, the oscillation frequency of the oscillation orthogonal to the excitation mode and to the Coriolis mode is greater than the oscillation frequency of the excitation mode, preferably greater than the frequency of the Coriolis mode,
**characterized in**
**that** the at least one stiffening element (3) has at least two separate and/or separately acting components (7),
wherein the at least two separate and/or separately acting components are designed as at least two stiffening ribs (4) and
**that** the at least two stiffening ribs (4) are arranged parallel to each other in such a way that, in the mounted state, the edges of the stiffening ribs facing the measuring tube (6) are arranged on a circular arc on the measuring tube (6).

13. Node element (2) according to claim 12, **characterized by** the features of the characterizing part of at least one claim of claims 2 to 11.

## Revendications

1. Appareil de mesure de débit massique à effet Coriolis (1) comprenant au moins un tube de mesure (6), au moins un générateur de vibrations (8) et au moins deux capteurs de vibrations (9) et au moins deux éléments nodaux (2), ledit au moins un générateur de vibrations (8) excitant en vibration le tube de mesure (6) en fonctionnement, lesdits au moins deux éléments nodaux définissant la zone de vibration et au moins un élément nodal (2) comportant au moins un élément de raidissement (3),
et dans lequel
ledit au moins un élément nodal (2) comportant ledit au moins un élément de raidissement (3) est conçu et agencé de telle sorte que l'élément de raidissement (3) augmente la rigidité du tube de mesure (6) vis-à-vis de vibrations orthogonales au mode d'excitation et au mode de Coriolis, de sorte qu'en fonctionnement, la fréquence de vibration des vibrations orthogonales au mode d'excitation et au mode de Coriolis est supérieure à la fréquence de vibration du mode d'excitation, de préférence supérieure à la fréquence du mode de Coriolis,
**caractérisé en ce que**
ledit au moins un élément de raidissement (3) comporte au moins deux composants (7) séparés et/ou agissant séparément,
lesdits au moins deux composants séparés et/ou agissant séparément étant conçus sous la forme d'au moins deux nervures de raidissement (4), et **en ce que** lesdites au moins deux nervures de raidissement (4) sont agencées parallèlement l'une à l'autre de telle sorte que les bords des nervures de raidissement tournés vers le tube de mesure (6) sont agencés sur un arc de cercle sur le tube de mesure (6).

2. Appareil de mesure de débit massique à effet Coriolis (1) selon la revendication 1, **caractérisé en ce qu'**au moins un second élément de raidissement (3) est présent, le second élément de raidissement (3) étant agencé sur l'élément nodal (2), de préférence à l'opposé du premier élément de raidissement (3).

3. Appareil de mesure de débit massique à effet Coriolis (1) selon la revendication 1 ou 2, **caractérisé en ce que** ledit au moins un élément de raidissement (3) repose par une surface d'appui (5) sur la circonférence du tube de mesure (6).

4. Appareil de mesure de débit massique à effet Coriolis (1) selon l'une quelconque des revendications 1 à 3, **caractérisé en ce que** ledit au moins un élément de raidissement (3) couvre moins de 40 %, de préférence moins de 30 %, et plus particulièrement moins de 20 % de la circonférence du tube de mesure.

5. Appareil de mesure de débit massique à effet Coriolis (1) selon l'une quelconque des revendications 1 à 4, **caractérisé en ce que** l'extension de l'élément de raidissement (3) perpendiculairement au tube de mesure (6) est au moins par sections supérieure à l'extension de l'élément de raidissement (3) dans la direction circonférentielle du tube de mesure (6).

6. Appareil de mesure de débit massique à effet Coriolis (1) selon l'une quelconque des revendications 1 à 5, **caractérisé en ce que** l'extension d'au moins un composant (7) de l'élément de raidissement perpendiculairement au tube de mesure est supérieure à l'extension de ce composant dans la direction circonférentielle du tube de mesure.

7. Appareil de mesure de débit massique à effet Coriolis (1) selon l'une quelconque des revendications 1 à 6, **caractérisé en ce que** l'extension longitudinale d'au moins un composant (7) de l'élément de raidissement (3) est parallèle à l'axe longitudinal du tube de mesure (6).

8. Appareil de mesure de débit massique à effet Coriolis (1) selon l'une quelconque des revendications 1 à 7, **caractérisé en ce que** lesdits au moins deux composants (7) sont conçus sous la forme d'au moins deux nervures de raidissement (4), lesdites au moins deux nervures de raidissement (4) reposant par leur bord étroit sur le tube de mesure (6).

9. Appareil de mesure de débit massique à effet Coriolis (1) selon l'une quelconque des revendications 1 à 8, **caractérisé en ce que** les composants individuels (7) de l'élément de raidissement (3) sont reliés par au moins une surface de liaison, en particulier en forme d'arc de cercle, de préférence par la surface d'appui (5), ladite au moins une surface de liaison étant agencée sur le côté de l'élément de raidissement tourné vers le tube de mesure et/ou sur le côté de l'élément de raidissement tourné à l'opposé du tube de mesure.

10. Appareil de mesure de débit massique à effet Coriolis (1) selon l'une quelconque des revendications 1 à 9, **caractérisé en ce que** ledit au moins un élément de raidissement (3) est formé d'un seul tenant avec l'élément nodal (2).

11. Appareil de mesure de débit massique à effet Coriolis (1) selon l'une quelconque des revendications 1 à 10, **caractérisé en ce que** ledit au moins un élément nodal (2), avec ledit au moins un élément de raidissement (3), est monté directement sur le tube de mesure (6) au moyen d'un procédé de fabrication additive.

12. Élément nodal (2) destiné à être utilisé dans un appareil de mesure de débit massique à effet Coriolis (1) comprenant au moins un tube de mesure (6), au moins un générateur de vibrations (8) et au moins deux capteurs de vibrations (9), ledit au moins un générateur de vibrations (8) excitant en vibration le tube de mesure (6) en fonctionnement, la zone de vibration étant définie par au moins deux éléments nodaux, et ledit élément nodal (2) comportant au moins un élément de raidissement (3),
et dans lequel
l'élément nodal (2) est conçu et peut être agencé en fonctionnement de telle sorte que l'élément de raidissement (3) augmente la rigidité du tube de mesure (6) vis-à-vis de vibrations orthogonales au mode d'excitation et au mode de Coriolis, de sorte qu'en fonctionnement, la fréquence de vibration des vibrations orthogonales au mode d'excitation et au mode de Coriolis est supérieure à la fréquence de vibration du mode d'excitation, de préférence supérieure à la fréquence du mode de Coriolis,
**caractérisé en ce que**
ledit au moins un élément de raidissement (3) comporte au moins deux composants (7) séparés et/ou agissant séparément,
lesdits au moins deux composants séparés et/ou agissant séparément étant conçus sous la forme d'au moins deux nervures de raidissement (4), et **en ce que** lesdites au moins deux nervures de raidissement (4) sont agencées parallèlement l'une à l'autre de telle sorte que, dans l'état monté, les bords des nervures de raidissement tournés vers le tube de mesure (6) sont agencés sur un arc de cercle sur le tube de mesure (6).

13. Élément nodal (2) selon la revendication 12, **caractérisé par** les éléments caractéristiques de la partie caractérisante d'au moins l'une des revendications 2 à 11.
